# FASCICULE DE BREVET EUROPEEN

(11) **EP 3 580 580 B1**
(45) Date de publication et mention de la délivrance du brevet: **31.03.2021**
(21) Numéro de dépôt: 18706814.3
(22) Date de dépôt: 12.02.2018
(51) Int. Cl.: G01S 7/40, H01Q 15/18

(54) **DISPOSITIF ET PROCEDE D'ETALONNAGE POUR MESURES RADAR**
VORRICHTUNG UND VERFAHREN ZUR KALIBRIERUNG VON RADARMESSUNGEN
DEVICE AND METHOD FOR CALIBRATING RADAR MEASUREMENTS

(30) Priorité: 13.02.2017 FR 1751156
(43) Date de publication de la demande: 18.12.2019
(73) Titulaire: Office National d'Etudes et de Recherches Aérospatiales, 91120 Palaiseau (FR)
(72) Inventeur: BOBILLOT, Gérard, 78530 Buc (FR); MARCELLIN, Jean-Paul, 92140 Clamart (FR)
(74) Mandataire: Plasseraud IP
(86) Numéro de dépôt international: PCT/FR2018/050334
(87) Numéro de publication internationale: WO 2018/146430

(56) Documents cités:
- WO-A1-2015/000088
- CN-A- 103 163 507
- RU-C1- 2 628 671
- US-A1- 2005 128 136
- US-B1- 7 218 273

## Description

La présente invention concerne un dispositif d'étalonnage pour mesures radar, ainsi qu'un procédé d'étalonnage qui utilise un tel dispositif.

Les systèmes radar, qu'ils soient des systèmes radar de mesure, de détection ou des systèmes radar imageurs, nécessitent d'être étalonnés. L'étalonnage porte sur les niveaux de rayonnement électromagnétique qui sont détectés, les vitesses mesurées, ou les capacités de détection dans un environnement réel qui comporte des réflexions et des sources de rayonnement parasites. Pour cela, un dispositif d'étalonnage est utilisé, dont l'un au moins des paramètres parmi sa surface équivalente radar, désignée par SER, sa position et sa vitesse de déplacement, avec l'orientation du déplacement, doivent être connus. Par exemple, une sphère de Luneberg ou un trièdre trirectangulaire, ou un autre dispositif d'étalonnage dont la valeur de SER est connue, peut être tracté par un avion, suspendu à un ballon ou à un parachutiste, ou embarqué à bord d'un aéronef. Dans les cas où le dispositif d'étalonnage à valeur de SER qui est connue, est suspendu à un avion, à un ballon ou à un parachutiste, la distance de séparation entre le dispositif d'étalonnage d'une part, et l'avion, ballon ou parachutiste d'autre part, doit être suffisante pour que le rayonnement primaire qui est émis par le système radar éclaire sélectivement le dispositif d'étalonnage à l'exclusion de l'avion, ballon ou parachutiste. Cette condition est nécessaire pour ne détecter ou mesurer que du rayonnement qui est réfléchi par le dispositif d'étalonnage, mais elle rend complexe la mise en œuvre pratique du procédé d'étalonnage. En outre, la position et la vitesse de déplacement du dispositif d'étalonnage peuvent ne pas être connues avec des précisions suffisantes.

Dans le cas où le dispositif d'étalonnage à valeur de SER connue est embarqué à bord d'un aéronef, ou fixé sur une partie exposée de sa surface, la position et la vitesse de déplacement du dispositif d'étalonnage sont connues précisément. Cela est par exemple le cas dans la demande US2005/0128136.

Mais la contribution de la réflexion du rayonnement radar primaire sur le dispositif d'étalonnage, dans le rayonnement total qui est détecté par le système radar, est superposée à celle de la réflexion sur la structure de l'aéronef. La distinction entre les deux contributions est très difficile et produit une incertitude importante sur le résultat de l'étalonnage.

Il a aussi été proposé de procéder à l'étalonnage d'un système radar en posant sur le sol le dispositif d'étalonnage à valeur de SER connue, ou en le posant sur un véhicule qui roule sur le sol. Mais l'interaction du rayonnement radar avec le sol perturbe sa propagation, pour le rayonnement radar primaire et pour le rayonnement radar réfléchi, et la séparation dans le rayonnement qui est détecté de la contribution qui est due seulement à la réflexion sur le dispositif d'étalonnage, par rapport à des sources de rayonnement ou des réflexions parasites, peut être très difficile.

A partir de cette situation, un but de la présente invention consiste à proposer un nouveau dispositif d'étalonnage qui permet des mesures d'étalonnage qui sont plus fiables, plus précises, plus simples à mettre en œuvre et moins onéreuses.

Pour cela, un premier aspect de l'invention propose un dispositif d'étalonnage pour mesures radar, qui comprend :
- un drone volant à rotors multiples, les rotors ayant des axes qui sont verticaux pendant un vol stationnaire du drone, et étant répartis angulairement autour d'un bloc de cœur du drone, en projection dans un plan de référence du drone qui est perpendiculaire aux axes des rotors ;
- un réflecteur d'onde radar, ayant une forme générale annulaire autour d'un axe de symétrie du réflecteur, et une forme de section dans un plan méridien contenant l'axe de symétrie, qui est sensiblement invariante par rotation autour de cet axe de symétrie ; et
- des moyens de fixation du réflecteur sur le drone, qui sont adaptés pour que l'axe de symétrie du réflecteur reste perpendiculaire au plan de référence du drone, et pour que le réflecteur entoure latéralement l'ensemble des rotors du drone lorsqu'il est maintenu sur le drone par les moyens de fixation.

Autrement dit, le drone constitue un porteur aérien du réflecteur d'onde radar. Lorsque l'étalonnage est effectué pendant que le drone est en vol, à une altitude suffisante, le sol ne provoque pas de perturbation dans la propagation du rayonnement entre le système radar à étalonner et le dispositif d'étalonnage de l'invention.

Grâce à la configuration du dispositif d'étalonnage de l'invention, le drone et les moyens de fixation du réflecteur sont au moins partiellement masqués par le réflecteur, pour une onde radar qui parvient au dispositif d'étalonnage selon une direction d'incidence oblique ou perpendiculaire par rapport à l'axe de symétrie du réflecteur. Autrement dit, le réflecteur masque le drone vis-à-vis du rayonnement radar primaire. Le rayonnement qui est détecté en retour par le système radar à étalonner ne comporte donc pas, ou quasiment pas, de contribution due à une réflexion du rayonnement sur la structure du drone, c'est-à-dire peu ou pas de contributions dues aux rotors ou au bloc de cœur du drone. Autrement dit, le rayonnement qui est détecté par le système radar ne provient que de la réflexion du rayonnement radar primaire sur le réflecteur.

En outre, lorsque le réflecteur possède une forme générale qui est sensiblement invariante par toute rotation autour de son axe de symétrie, c'est-à-dire sensiblement invariante par des rotations d'angles quelconques compris entre 0° (degré) et 360° autour de l'axe de symétrie, et cet axe de symétrie étant vertical pour la position usuelle du drone en vol, chaque résultat de mesure du rayonnement réfléchi qui est délivré par le système radar à étalonner, ne dépend pas de l'orientation en azimut du dispositif d'étalonnage.

Pour ces raisons, les mesures d'étalonnage qui sont obtenues en utilisant un dispositif conforme à l'invention, peuvent être plus fiables et plus précises, et sont simples à mettre en œuvre.

En outre, la position du réflecteur, qui est confondue avec celle du drone, peut être facile à déterminer de multiples façons. Par exemple, cette position peut être déterminée en temps réel et à coût réduit lorsque le drone est muni d'un système de géolocalisation par réception de signaux radio qui proviennent de plusieurs satellites.

Le drone qui est utilisé dans le dispositif d'étalonnage de l'invention peut être un mini-drone ou un micro-drone, dont le coût est aussi réduit et l'utilisation facile.

Le drone est masqué par le réflecteur vis-à-vis du rayonnement radar primaire dans une mesure augmentée lorsque les moyens de fixation du réflecteur sur le drone sont tels que les rotors et/ou le bloc de cœur du drone soit (soient) compris entre deux bords du réflecteur qui sont opposés, en projection sur un axe qui est perpendiculaire au plan de référence du drone, lorsque le réflecteur est maintenu sur le drone par ces moyens de fixation.

Certaines formes préférées pour le réflecteur réduisent l'influence de l'angle d'incidence sous lequel le rayonnement radar primaire atteint le réflecteur dans un plan vertical, qui est effective sur la quantité de rayonnement radar qui est réfléchie vers le système radar à étalonner. Les mesures d'étalonnage peuvent ainsi être encore plus fiables, plus précises et plus simples à mettre en œuvre, puisque l'inclinaison du drone intervient dans une mesure moindre sur la quantité de rayonnement qui est réfléchie en direction du système radar à étalonner. Ces formes préférées pour la surface externe du réflecteur, qui est tournée à l'opposé de l'axe de symétrie du réflecteur, sont :
- une réunion de deux couronnes chacune en forme d'un tronc de cône respectif, et ayant chacune pour axe de symétrie de révolution l'axe de symétrie du réflecteur, les deux couronnes formant l'une avec l'autre un angle rentrant le long d'un cercle d'intersection entre les deux cônes, cet angle rentrant étant dans un plan méridien qui contient l'axe de symétrie du réflecteur, et étant ouvert à l'opposé de cet axe de symétrie. Dans ce cas, l'angle rentrant est de préférence un angle droit dans chaque plan méridien qui contient l'axe de symétrie du réflecteur. En outre, chacune des deux couronnes peut être générée par rotation d'un segment d'une génératrice respective autour de l'axe de symétrie du réflecteur, chaque segment de génératrice ayant une longueur qui est comprise entre 0,20 m (mètre) et 0,50 m ;
- une portion de sphère, qui est limitée par deux plans perpendiculaires à l'axe de symétrie du réflecteur ;
- une portion d'ellipsoïde de révolution, qui a pour axe de symétrie de révolution l'axe de symétrie du réflecteur, et qui est limitée par deux plans perpendiculaires à cet axe de symétrie ; et
- une portion de cylindre de révolution, qui a pour axe de symétrie de révolution l'axe de symétrie du réflecteur, et qui est limitée par deux plans perpendiculaires à cet axe de symétrie.

De préférence, le réflecteur possède une valeur de surface équivalente radar (SER) qui est supérieure à 1 m² (mètre-carré).

De préférence aussi, le réflecteur peut posséder une conductivité électrique moyenne qui est supérieure à 10⁴ Ω⁻¹·m⁻¹. Simultanément, une épaisseur de matériau ayant cette conductivité électrique moyenne, est de préférence supérieure à trois fois une épaisseur de peau qui est effective pour la pénétration de l'onde radar dans le matériau lorsqu'elle est réfléchie par le réflecteur.

Alternativement, le réflecteur peut posséder une résistance carrée qui est inférieure à 0,1 Ω/□.

Dans divers modes de réalisation de l'invention, le réflecteur peut comprendre l'un parmi :
- une structure métallique rigide, qui est constituée par un ou plusieurs métaux ou alliages métalliques ;
- une couche conductrice électriquement, par exemple une couche de peinture conductrice, qui recouvre une structure de base rigide du réflecteur ;
- une structure rigide qui incorpore des fibres conductrices électriquement, telles que des fibres de carbone ; et
- un grillage métallique.

Avantageusement, le réflecteur peut comprendre au moins une portion de paroi qui est munie d'ouvertures supplémentaires disposées dans une surface latérale périphérique du réflecteur, en plus d'ouvertures du réflecteur qui correspondent à des limites de la portion de paroi opposées le long de l'axe de symétrie du réflecteur. De telles ouvertures supplémentaires réduisent le poids du réflecteur qui est transporté par le drone aérien, ainsi que la prise au vent du réflecteur transporté par le drone. En outre, lorsque la taille des ouvertures supplémentaires est convenablement choisie par rapport à la longueur d'onde du rayonnement radar, elles ne perturbent pas substantiellement l'efficacité de réflexion du réflecteur.

Un second aspect de l'invention propose un procédé d'étalonnage qui est exécuté en utilisant un dispositif d'étalonnage pour mesures radar conforme au premier aspect de l'invention. Ce procédé peut être l'un parmi :
- une détermination de valeur de surface équivalente radar (SER), ou de coefficient de rétrodiffusion, qui est effectuée pour une cible destinée à être détectée par un système de détection ou de mesure radar ;
- une calibration d'un système de détection ou de mesure radar ; et
- une calibration de moyens de mesure de surface équivalente radar (SER).

Lorsque le rayonnement radar possède une longueur d'onde déterminée, et lorsque la paroi du réflecteur d'onde radar comporte des ouvertures supplémentaires, chacune de ces ouvertures supplémentaires peut avantageusement posséder une plus grande dimension qui est inférieure à un dixième de la longueur d'onde du rayonnement radar.

D'autres particularités et avantages de la présente invention apparaîtront dans la description ci-après d'exemples de réalisation non limitatifs, en référence aux dessins annexés, dans lesquels :
- les figures 1a et 1b sont des représentations générales d'un dispositif d'étalonnage pour mesures radar qui est conforme à la présente invention, en perspective et en coupe transversale, respectivement ; et
- les figures 2 à 5 illustrent plusieurs formes possibles pour le réflecteur d'un dispositif d'étalonnage pour mesures radar.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

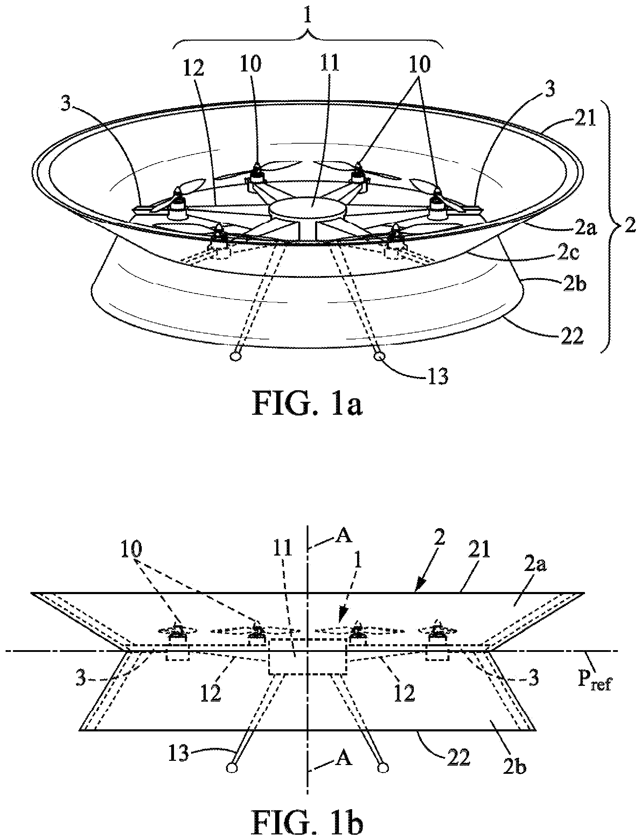

Dans les figures 1a et 1b, la référence 1 désigne un drone volant de type multicoptère, comportant par exemple quatre, six ou huit rotors. Les axes des rotors sont orientés pour être verticaux lorsque le drone est en vol, notamment en vol stationnaire, afin d'exercer une poussée vers le haut qui est opposée au poids total du drone 1 et d'une charge utile embarquée sur celui-ci. De façon connue pour ce type de drones, les rotors désignés par la référence 10 sont reliés à un bloc de cœur du drone, désigné par la référence 11, par des bras rigides 12. P_{ref} est un plan de référence du drone 1, qui est perpendiculaire aux axes des rotors 10, et donc horizontal lorsque le drone 1 est en vol stationnaire. Les bras 12 sont conçus pour que les rotors 10 soient répartis angulairement autour du bloc de cœur 11 en projection dans le plan P_{ref}. De tels drones volants sont disponibles commercialement, notamment sous forme de mini-drones ou de micro-drones, avec des capacités d'emport de charge utile variables.

Le réflecteur d'onde radar 2 fait partie de la charge utile qui est embarquée sur le drone 1. Pour cela, des moyens de fixation appropriés 3, par exemple des extensions rigides des bras 12, connectent le réflecteur 2 au drone 1. L'ensemble du drone 1, du réflecteur 2 et des moyens de fixation 3 constitue le dispositif d'étalonnage pour mesures radar qui est proposé par l'invention.

Le réflecteur 2 possède une forme générale annulaire autour d'un axe de symétrie qui est noté A-A dans les figures. Les moyens de fixation 3 sont tels que l'axe de symétrie A-A du réflecteur 2 reste perpendiculaire au plan de référence P_{ref} du drone 1, et que le réflecteur 2 entoure latéralement l'ensemble des rotors 10. Ainsi, le réflecteur 2 masque au moins partiellement le drone 1 pour un rayonnement radar primaire qui a été émis par un système de détection et/ou de mesure radar, et qui parvient au dispositif d'étalonnage de l'invention sous une incidence qui est perpendiculaire ou oblique par rapport à l'axe A-A. Un tel masquage est encore plus efficace lorsque les rotors 10 du drone 1, et avantageusement aussi le bloc de cœur 11 du drone 1, sont contenus entre un bord supérieur 21 et un bord inférieur 22 du réflecteur 2. Toutefois, il est possible que des pieds 13 du drone 1 débordent en dessous du bord inférieur 22 du réflecteur 2. Dans ce cas, les pieds 13 ont de préférence un pouvoir de réflexion de l'onde radar qui est beaucoup plus faible que celui du réflecteur 2.

Par ailleurs, grâce à une telle forme du réflecteur 2 et une telle disposition sur le drone 1, l'efficacité en vol des rotors 10 pour la sustentation et la propulsion du drone de type multicoptère n'est pas perturbée.

En outre, le réflecteur 2 possède une forme générale qui est globalement invariante par rotation autour de l'axe de symétrie A-A. Plus précisément, la forme du réflecteur 2 est telle que ses caractéristiques de réflexion de l'onde radar soient sensiblement invariantes par rotation autour de l'axe A-A.

Le réflecteur 2 peut posséder différentes formes tridimensionnelles, selon la forme de sa section dans un plan méridien qui contient l'axe de symétrie A-A.

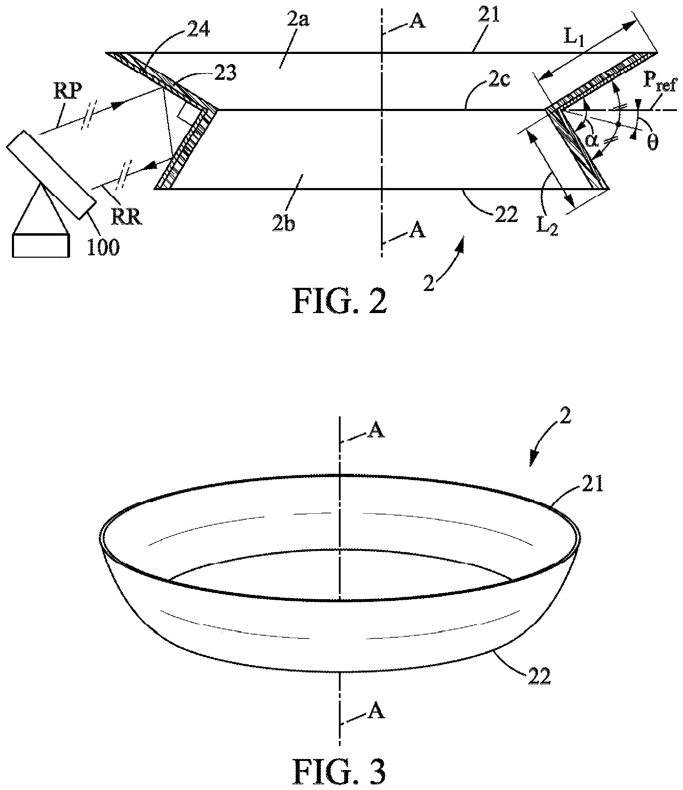

Dans le mode de réalisation du réflecteur 2 qui est représenté sur les figures 1a, 1b et 2, il est constitué par deux couronnes 2a et 2b qui sont connectées le long d'une ligne de jonction circulaire 2c. Chaque couronne 2a, 2b est de la forme d'un tronc de cône qui possède l'axe de symétrie A-A comme axe de symétrie de révolution. Les sommets respectifs des deux cônes qui correspondent à l'une et à l'autre des couronnes 2a et 2b, respectivement, sont situés sur l'axe A-A dans des directions opposées : le sommet du cône qui correspond à la couronne supérieure 2a est situé vers le bas lorsque le réflecteur 2 est fixé sur le drone 1, et le sommet du cône qui correspond à la couronne inférieure 2b est situé vers le haut. De cette façon, des surfaces externes des deux couronnes 2a et 2b forment un angle rentrant dans un plan méridien quelconque qui contient l'axe A-A. Cet angle est noté α dans la figure 2, et a pour sommet l'intersection de la ligne de jonction 2c avec le plan méridien. L'angle α étant formé par les surfaces externes des deux couronnes 2a et 2b, il est ouvert à l'opposé de l'axe de symétrie A-A. Toutefois, les cônes qui définissent les deux couronnes 2a et 2b peuvent avoir des angles d'ouverture à leurs sommets respectifs qui sont différents, de sorte que l'angle α soit réparti inégalement entre les deux côtés du plan qui contient la ligne de jonction 2c, et qui est parallèle au plan de référence P_{ref}. Par exemple, l'angle orienté θ à partir du plan de référence P_{ref} jusqu'à la bissectrice de l'angle α peut être égal à 10° vers le bas, mais toute autre valeur pour l'angle θ qui est préférablement comprise entre 0° et 90° vers le bas, est aussi possible (voir la partie droite de la figure 2).

Possiblement aussi, les deux couronnes 2a et 2b peuvent être maintenues à distance l'une de l'autre par les moyens de fixation 3, avec un intervalle de séparation entre elles tout en restant parallèles. Dans une telle configuration, la ligne de jonction 2c n'est plus matérielle, mais correspond à la ligne d'intersection entre les deux cônes qui définissent séparément l'une et l'autre des couronnes 2a et 2b.

Dans des réalisations préférées de l'invention qui sont conformes aux figures 1a, 1b et 2, l'angle rentrant α est égal à 90° (degré) dans chaque plan méridien. En effet, dans ce cas, un rayonnement radar primaire qui parvient au réflecteur 2 en provenance d'un système radar 100 (figure 2) avec une direction de propagation incidente qui est contenue dans un plan méridien du réflecteur 2, est réfléchi géométriquement avec une direction de propagation de retour qui est parallèle à la direction de propagation incidente, mais en sens opposé (voir la partie gauche de la figure 2). Un tel réflecteur radar est particulièrement adapté pour être détecté avec un niveau de signal important par le système 100 lorsque ce dernier est de type monostatique, c'est-à-dire que son système d'émission et son système de réception de rayonnement sont situés à un même endroit. Les références RP et RR désignent respectivement le rayonnement radar primaire qui est émis par le système 100, et la partie de ce rayonnement qui est réfléchie par le réflecteur 2.

Les deux couronnes 2a et 2b peuvent avoir des longueurs mesurées dans un plan méridien quelconque, le long des génératrices des cônes correspondants, qui sont comprises entre 20 cm (centimètre) et 50 cm, par exemple égales à 30 cm. Le dispositif d'étalonnage est alors adapté pour un rayonnement radar qui possède une fréquence supérieure à 500 MHz (mégahertz).

Pour d'autres configurations, et notamment lorsque le système radar 100 est bistatique, c'est-à-dire que son système d'émission et son système de réception du rayonnement radar sont situés à des endroits distants l'un de l'autre, il peut être avantageux que le réflecteur 2 produise une diffusion du rayonnement radar primaire RP qui est répartie dans un angle solide plus large. Dans ce cas, le réflecteur 2 peut être une portion de sphère limitée par le bord supérieur 21 et le bord inférieur 22, comme représenté sur la figure 3. Par exemple, le rayon de la sphère peut être compris entre 0,2 m et 2 m, et l'épaisseur du réflecteur 2, mesurée selon l'axe A-A entre les bords 21 et 22, peut être comprise entre 0,2 m et 2 m.

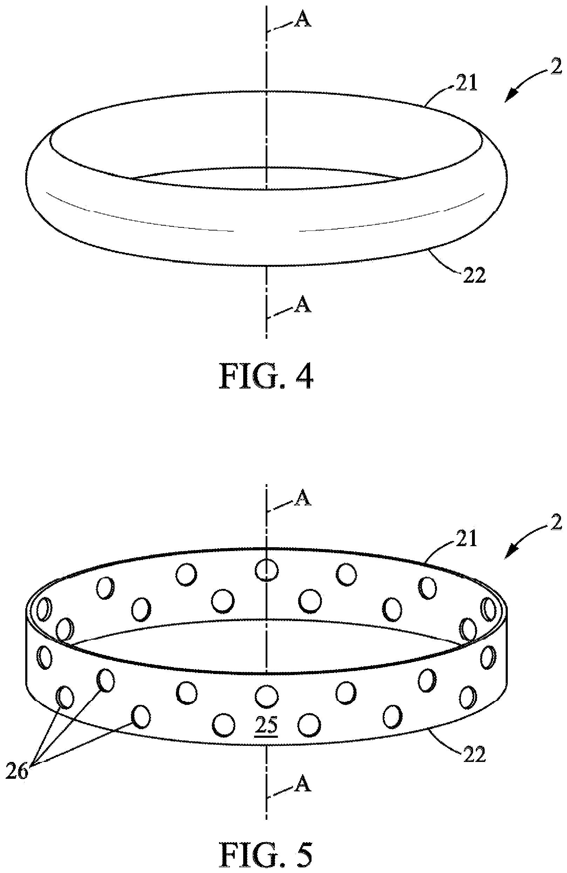

Alternativement, le réflecteur 2 peut être une portion d'un ellipsoïde de révolution, qui est encore limitée par le bord supérieur 21 et le bord inférieur 22, comme représenté sur la figure 4. L'axe de symétrie de révolution est encore l'axe A-A. Par exemple, les demi-axes de l'ellipsoïde peuvent être compris entre 0.2 m et 2 m pour le demi-axe horizontal, et entre 0,2 m et 2 m pour le demi-axe vertical. L'épaisseur du réflecteur 2, mesurée selon l'axe A-A entre les bords 21 et 22, peut encore être comprise entre 0,2 m et 2 m.

Enfin, la figure 5 montre encore un autre exemple, dans lequel le réflecteur 2 est un segment de cylindre de révolution, d'axe A-A, et limité par les bords 21 et 22. Par exemple, le rayon du cylindre peut être compris entre 0,2 m et 2 m, et l'épaisseur du réflecteur 2, mesurée selon l'axe A-A entre les bords 21 et 22, peut encore être comprise entre 0,1 m et 1 m.

Une partie du réflecteur 2 qui est efficace pour réfléchir l'onde radar possède de préférence une conductivité électrique moyenne qui est supérieure à 10⁴ Ω⁻¹·m⁻¹. En effet, le réflecteur 2 peut être constitué par une ou plusieurs surfaces continues comme évoqué jusqu'à présent, mais il peut alternativement comprendre une ou plusieurs surfaces inhomogènes ou discontinues.

Lorsque le réflecteur 2 comprend une ou plusieurs surface(s) continue(s), celle(s)-ci peu(ven)t être constituée(s) par un ou plusieurs métal (métaux) ou alliage(s) métallique(s), dont la (les) conductivité(s) électrique(s) est (sont) de préférence supérieure(s) à 10⁴ Ω⁻¹·m⁻¹. De tels alliages peuvent être à base d'aluminium ou de titane, par exemple. Dans ce cas, et de façon connue, l'onde radar pénètre dans le métal ou l'alliage, à partir de sa surface externe qui reçoit cette onde radar, et est réfléchie dans une proportion d'autant plus grande que l'épaisseur du métal / de l'alliage est supérieure à une valeur appelée épaisseur de peau, qui est notée δ et égale à (µ₀·σ·f·π)^{-1/2}, où µ₀ est la perméabilité magnétique du vide, σ la conductivité électrique du métal / de l'alliage, et f la fréquence de l'onde radar, par exemple comprise entre 3 MHz (mégahertz) et 12 GHz (gigahertz), notamment égale à 4 GHz. De préférence, la portion de métal / d'alliage qui constitue le réflecteur possède une épaisseur qui est au moins trois fois supérieure à l'épaisseur de peau. L'intensité de l'onde radar qui est transmise à travers le réflecteur est alors inférieure à 0,016 fois celle de l'onde radar primaire.

Alternativement, le réflecteur 2 peut comprendre une ou plusieurs surface(s) conductrice(s) constituée(s) par une couche conductrice électriquement, notamment une couche de peinture conductrice, qui recouvre une structure de base rigide du réflecteur. Par exemple, une peinture à base d'argent peut être utilisée à cet effet. Dans la figure 2, les références 23 et 24 désignent la structure de base rigide et la couche conductrice, respectivement. Selon une autre possibilité encore, qui présente l'avantage de réduire le poids du réflecteur 2, celui-ci peut être constitué par une structure rigide qui incorpore des fibres conductrices électriquement. Une telle structure rigide peut être en un matériau composite qui combine des fibres de carbone et une matrice en résine, par exemple en résine époxy.

Lorsque le réflecteur 2 comprend une ou plusieurs surface(s) discontinue(s), celle(s)-ci peu(ven)t être constituée(s) par un grillage métallique, ou par une (des) portion(s) de paroi(s) qui est (sont) munie(s) d'ouvertures. Ces portions de parois peuvent avoir l'une des constitutions citées ci-dessus pour des réflecteurs à surfaces continues. Les ouvertures qui sont ainsi ménagées dans chaque portion de paroi du réflecteur 2 sont supplémentaires par rapport aux deux ouvertures que présente le réflecteur 2 au niveau de ses bords supérieur 21 et inférieur 22, et qui résultent de la géométrie annulaire du réflecteur. Lorsque le réflecteur 2 est formé de grillage ou présente des ouvertures supplémentaires, c'est la valeur moyenne de la conductivité électrique, prenant en compte les portions de matériau conducteur électriquement et les ouvertures supplémentaires, qui est de préférence supérieure à 10⁴ Ω⁻¹·m⁻¹. De plus, chaque maille de grillage ou chaque ouverture supplémentaire possède des dimensions qui sont de préférence inférieures à 1/10^{ème} de la longueur d'onde du rayonnement radar, pour ne pas provoquer individuellement de diffusion significative pour le rayonnement radar. A titre d'illustration, les références 25 et 26 dans la figure 5 désignent la paroi qui constitue le réflecteur 2 et des ouvertures supplémentaires optionnelles dans cette paroi, respectivement.

Lorsque le réflecteur 2 comprend une couche conductrice électriquement, un grillage métallique, ou une portion de paroi munie d'ouvertures, un paramètre électrique pertinent pour mesurer l'efficacité du réflecteur est la résistance carrée. De façon connue, la résistance carrée est définie comme le quotient de la résistivité électrique moyenne par l'épaisseur de la couche conductrice, du grillage ou de la portion de paroi, respectivement. Une valeur de résistance carrée qui est inférieure à 0,1 Ω, également notée 0,1 Ω/□ ou 0,1 Ω/carré, est appropriée pour le réflecteur 2.

En outre, l'utilisation du drone 1 pour porter le réflecteur 2 permet d'en connaître la position avec exactitude et de façon quasi-instantanée. En effet, la plupart des drones sont équipés de systèmes de géolocalisation par réception de signaux radio en provenance de satellites, et des résultats de géolocalisation peuvent être transmis par le drone 1 pendant que le dispositif d'étalonnage est détecté par le système radar 100.

Un premier procédé d'étalonnage qui peut être exécuté avantageusement avec un dispositif d'étalonnage tel que décrit précédemment, consiste à déterminer le coefficient de rétrodiffusion d'une cible à étalonner, par rapport au réflecteur 2 du dispositif d'étalonnage. Pour cela, le dispositif d'étalonnage, comprenant le drone 1 qui transporte le réflecteur 2, est mis en vol jusqu'à une altitude qui peut être comprise entre 50 m (mètre) et quelques centaines de mètres, à une distance au sol du système radar 100 qui peut être comprise entre 0,1 km (kilomètre) et 2 km, par exemple. La tension de détection cohérente du rayonnement rétrodiffusé, qui est produite par le système radar 100, est alors enregistrée. La mesure est ensuite répétée en remplaçant, à bord du drone 1, le réflecteur 2 par la cible à étalonner, puis le drone est amené à la même position par rapport au système radar 100. Alors, le module du coefficient complexe de rétrodiffusion de la cible, noté ρ_{cible}, est donné par la formule : ρ_{cible} = ρ_{réflecteur}·(U_{cible}/U_{réflecteur}), où U_{cible} et U_{réflecteur} SOnt les tensions de détection cohérente mesurées pour la cible et pour le réflecteur 2, respectivement, et ρ_{réflecteur} est le module du coefficient complexe de rétrodiffusion du réflecteur 2, supposé connu initialement. De façon générale, il n'est pas nécessaire de faire coïncider les positions du drone lors des deux mesures effectuées l'une avec le réflecteur et l'autre avec la cible. Alors, si R_{cible} et R_{réflecteur} sont les distances d'éloignement respectives de la cible et du réflecteur par rapport au radar, la formule précédente : devient ρ_{cible} = ρ_{réflecteur}·(U_{cible}/U_{réflecteur})(R_{réflecteur}/R_{cible})². Une formule équivalente en fonction de la surface équivalente radar SER, est : σ_{cible} = σ_{réflecteur}·(U_{cible}/U_{réflecteur})² (R_{réflecteur}/R_{cible})⁴, où σ_{cible} et σ_{réflecteur} sont les SER de la cible et du réflecteur, respectivement. Toutefois, un tel premier procédé d'étalonnage n'est exact que si la cible à étalonner masque suffisamment le corps du drone pour l'onde radar.

Pour les formes du réflecteur 2 qui ont été évoquées plus haut, le coefficient de rétrodiffusion ρ_{réflecteur} peut éventuellement être calculé théoriquement. Alternativement, il peut être mesuré dans une chambre anéchoïque. Grâce au fait que le dispositif d'étalonnage de l'invention permet de s'affranchir des perturbations sur le rayonnement radar qui sont causées par le sol et par le drone, et grâce au fait que la mesure qui est effectuée pour le réflecteur 2 est insensible à l'orientation du dispositif d'étalonnage autour d'un axe vertical, le procédé d'étalonnage peut présenter une exactitude qui est grande. En outre, sa mise en œuvre est particulièrement simple. De façon connue, la surface équivalente radar (SER) de la cible est égale au carré du module de son coefficient de rétrodiffusion.

Un deuxième procédé d'étalonnage qui peut être exécuté avantageusement avec un dispositif d'étalonnage tel que décrit précédemment, est la calibration d'un système de détection ou de mesure radar. Pour cela, la mesure qui a été décrite précédemment avec le dispositif d'étalonnage et le système radar 100 est effectuée identiquement, le coefficient de rétrodiffusion ρ_{réflecteur} du réflecteur 2 étant connu initialement, notamment en ayant été déterminé par des calculs théoriques, et un coefficient complexe de sensibilité du récepteur du système 100 étant inconnu. La mise en relation de la valeur du coefficient ρ_{réflecteur} avec la tension de détection cohérente qui est délivrée par le récepteur du système radar 100, permet de déterminer la valeur du module du coefficient de sensibilité du système 100.

Enfin, un troisième procédé d'étalonnage qui peut être exécuté avantageusement avec un dispositif d'étalonnage tel que décrit précédemment, est la calibration de moyens de mesure de surface équivalente radar (SER). Le dispositif d'étalonnage de l'invention, dont le coefficient de rétrodiffusion est connu initialement, notamment en ayant été déterminé par des calculs théoriques, est présenté aux moyens de mesure de surface équivalente radar à calibrer. Le résultat de mesure qui est délivré par ces moyens de mesure de surface équivalente radar est alors identifié au coefficient de rétrodiffusion ρ_{réflecteur} du réflecteur 2, en tenant compte de l'effet de la distance d'éloignement entre le dispositif d'étalonnage et l'émetteur-récepteur des moyens de mesure de surface équivalente radar.

Il est entendu que l'invention peut être reproduite en modifiant des aspects secondaires de celle-ci par rapport aux modes de réalisation qui ont été décrits en détail. En particulier, il est indiqué que l'invention peut être utilisée avec tous types de systèmes radar : systèmes radar fixes au sol, systèmes radar embarqués à bord de navires, etc.

## Revendications

1. Dispositif d'étalonnage pour mesures radar, comprenant :
- un drone volant (1) à rotors multiples, les rotors (10) ayant des axes qui sont verticaux pendant un vol stationnaire du drone, et étant répartis angulairement autour d'un bloc de cœur (11) du drone, en projection dans un plan de référence (P_{ref}) du drone qui est perpendiculaire aux axes des rotors ;
- un réflecteur (2) d'onde radar, ayant une forme générale annulaire autour d'un axe de symétrie (A-A) du réflecteur, et telle que des caractéristiques de réflexion d'onde radar dudit réflecteur sont sensiblement invariantes par rotation autour dudit axe de symétrie ; et
- des moyens (3) de fixation du réflecteur (2) sur le drone (1), adaptés pour que l'axe de symétrie (A-A) du réflecteur reste perpendiculaire au plan de référence (P_{ref}) du drone, et pour que le réflecteur entoure latéralement l'ensemble des rotors (10) du drone, lorsque ledit réflecteur est maintenu sur le drone par lesdits moyens de fixation,de sorte que le drone (1) et les moyens (3) de fixation du réflecteur sont au moins partiellement masqués par le réflecteur (2), pour une onde radar qui parvient au dispositif d'étalonnage selon une direction d'incidence oblique ou perpendiculaire par rapport à l'axe de symétrie (A-A) du réflecteur,
**caractérisé en ce qu'**une surface externe du réflecteur (2), qui est tournée à l'opposé de l'axe de symétrie (A-A) dudit réflecteur, est l'une parmi :
- une réunion de deux couronnes (2a, 2b) chacune en forme d'un tronc de cône respectif, et ayant chacune pour axe de symétrie de révolution l'axe de symétrie (A-A) du réflecteur, les deux couronnes formant l'une avec l'autre un angle (a) rentrant le long d'un cercle (2c) d'intersection entre les deux cônes, ledit angle rentrant apparaissant dans un plan méridien qui contient l'axe de symétrie du réflecteur, et étant ouvert à l'opposé dudit axe de symétrie ;
- une portion de sphère, limitée par deux plans perpendiculaires à l'axe de symétrie (A-A) du réflecteur ;
- une portion d'ellipsoïde de révolution, ayant pour axe de symétrie de révolution l'axe de symétrie (A-A) du réflecteur (2), et limitée par deux plans perpendiculaires audit axe de symétrie du réflecteur ; et
- une portion de cylindre de révolution, ayant pour axe de symétrie de révolution l'axe de symétrie (A-A) du réflecteur, et limitée par deux plans perpendiculaires audit axe de symétrie du réflecteur (2).

2. Dispositif selon la revendication 1, dans lequel les moyens (3) de fixation du réflecteur (2) sur le drone (1) sont adaptés en outre pour que les rotors (10) soient compris entre deux bords (21, 22) du réflecteur qui sont opposés, en projection sur un axe qui est perpendiculaire au plan de référence (P_{ref}) du drone, lorsque le réflecteur est maintenu sur le drone par lesdits moyens de fixation.

3. Dispositif selon la revendication 1 ou 2, dans lequel les moyens (3) de fixation du réflecteur (2) sur le drone (1) sont adaptés en outre pour que le bloc de cœur (11) du drone soit compris entre les deux bords (21, 22) du réflecteur qui sont opposés, en projection sur l'axe qui est perpendiculaire au plan de référence (P_{ref}) du drone, lorsque le réflecteur est maintenu sur le drone par lesdits moyens de fixation.

4. Dispositif selon l'une quelconque des revendications précédentes, dans lequel la surface externe du réflecteur (2) est la réunion de deux couronnes (2a, 2b) chacune en forme d'un tronc de cône respectif, formant l'une avec l'autre un angle (a) rentrant le long d'un cercle (2c) de jonction entre les deux couronnes, ledit angle rentrant étant un angle droit dans un plan méridien qui contient l'axe de symétrie (A-A) du réflecteur.

5. Dispositif selon la revendication 4, dans lequel chacune des deux couronnes (2a, 2b) est générée par rotation d'un segment d'une génératrice respective autour de l'axe de symétrie (A-A) du réflecteur (2), chaque segment de génératrice ayant une longueur comprise entre 0,20 m et 0,50 m.

6. Dispositif selon l'une quelconque des revendications précédentes, dans lequel le réflecteur (2) possède une conductivité électrique moyenne supérieure à 104 Ω⁻¹·m⁻¹, et possède une épaisseur de matériau ayant ladite conductivité électrique moyenne, qui est supérieure à trois fois une épaisseur de peau effective pour une pénétration de l'onde radar dans ledit matériau lorsque ladite onde radar est réfléchie par ledit réflecteur,
ou dans lequel le réflecteur (2) possède une résistance carrée inférieure à 0,1 Ω.

7. Dispositif selon l'une quelconque des revendications précédentes, dans lequel le réflecteur (2) comprend l'un parmi :
- une structure métallique rigide, constituée par un ou plusieurs métaux ou alliages métalliques ;
- une couche conductrice électriquement (24), notamment une couche de peinture conductrice, qui recouvre une structure de base rigide (23) du réflecteur ;
- une structure rigide qui incorpore des fibres conductrices électriquement, telles que des fibres de carbone ; et
- un grillage métallique.

8. Dispositif selon l'une quelconque des revendications précédentes, dans lequel le réflecteur (2) comprend au moins une portion de paroi (25) qui est munie d'ouvertures supplémentaires (26) disposées dans une surface latérale périphérique du réflecteur, en plus d'ouvertures du réflecteur qui correspondent à des limites de la portion de paroi opposées le long de l'axe de symétrie (A-A) dudit réflecteur.

9. Procédé d'étalonnage, exécuté en utilisant un dispositif d'étalonnage pour mesures radar qui est conforme à l'une quelconque des revendications précédentes, ledit procédé étant sélectionné parmi :
- une détermination de valeur de surface équivalente radar, ou de coefficient rétrodiffusion, effectuée pour une cible destinée à être détectée par un système de détection ou de mesure radar ;
- une calibration d'un système de détection ou de mesure radar (100) ; et
- une calibration de moyens de mesure de surface équivalente radar.

10. Procédé selon la revendication 9, exécuté en utilisant un rayonnement radar qui possède une longueur d'onde déterminée, et en utilisant un dispositif d'étalonnage pour mesures radar qui est conforme à la revendication 8, et suivant lequel chaque ouverture supplémentaire (26) possède une plus grande dimension qui est inférieure à un dixième de la longueur d'onde du rayonnement radar.

## Patentansprüche

1. Kalibriervorrichtung für Radarmessungen, umfassend:
- eine Flugdrohne (1) mit mehreren Rotoren, wobei die Rotoren (10) Achsen aufweisen, die während eines Schwebefluges der Drohne vertikal sind und in Projektion in einer Bezugsebene (P_{ref}) der Drohne, die senkrecht zu den Achsen der Rotoren steht, winkelig um einen Kernblock (11) der Drohne verteilt sind;
- einen Radarwellenreflektor (2), der eine allgemeine Ringform um eine Symmetrieachse (A-A) des Reflektors aufweist, derart, dass die Merkmale der Radarwellenreflexion des Reflektors durch Rotation um die Symmetrieachse im Wesentlichen unveränderlich sind; und
- Mittel (3) zur Befestigung des Reflektors (2) an der Drohne (1), die derart ausgebildet sind, dass die Symmetrieachse (A-A) des Reflektors senkrecht zur Bezugsebene (P_{ref}) der Drohne bleibt und dass der Reflektor seitlich alle Rotoren (10) der Drohne umgibt, wenn der Reflektor durch die Befestigungsmittel an der Drohne gehalten ist, so dass die Drohne (1) und die Mittel (3) zur Befestigung des Reflektors durch den Reflektor (2) teilweise verdeckt sind, für eine Radarwelle, die die Kalibriervorrichtung gemäß einer Einfallsrichtung erreicht, die schräg oder senkrecht zur Symmetrieachse (A-A) des Reflektors steht,
**dadurch gekennzeichnet, dass** eine Außenfläche des Reflektors (2), die gegenüber der Symmetrieachse (A-A) des Reflektors gedreht ist, eine der folgenden ist:
- eine Vereinigung von zwei Kronen (2a, 2b), die jeweils die Form eines entsprechenden Kegelstumpfes haben und jeweils die Symmetrieachse (A-A) des Reflektors als Drehsymmetrieachse umfassen, wobei die beiden Kronen miteinander einen einspringenden Winkel (α) entlang eines Schnittkreises (2c) zwischen den beiden Kegeln bilden, wobei der einspringende Winkel in einer Meridianebene erscheint, die die Symmetrieachse des Reflektors umfasst, und gegenüber dieser Symmetrieachse offen ist;
- ein Kugelteil, begrenzt durch zwei Ebenen, die senkrecht zur Symmetrieachse (A-A) des Reflektors sind;
- ein Teil einer Rotationsellipse, die als Rotationssymmetrieachse die Symmetrieachse (A-A) des Reflektors (2) aufweist und von zwei Ebenen begrenzt ist, die senkrecht zu der Symmetrieachse des Reflektors stehen; und
- ein Teil des Rotationszylinders, der als seine Rotationssymmetrieachse die Symmetrieachse (A-A) des Reflektors aufweist und durch zwei Ebenen begrenzt ist, die senkrecht zu der Symmetrieachse des Reflektors (2) stehen.

2. Vorrichtung nach Anspruch 1, wobei die Mittel (3) zur Befestigung des Reflektors (2) an der Drohne (1) ferner derart angepasst sind, dass die Rotoren (10) zwischen zwei gegenüberliegenden Rändern (21, 22) des Reflektors in Projektion auf eine zur Bezugsebene (P_{ref}) der Drohne senkrechte Achse liegen, wenn der Reflektor durch die Befestigungsmittel an der Drohne gehalten ist.

3. Vorrichtung nach Anspruch 1 oder 2, wobei die Mittel (3) zur Befestigung des Reflektors (2) an der Drohne (1) ferner derart angepasst sind, dass sich der Kernblock (11) der Drohne zwischen den beiden Rändern (21, 22) des Reflektors befindet, die sich in der Projektion auf die Achse, die senkrecht zur Bezugsebene (P_{ref}) der Drohne ist, gegenüberliegen, wenn der Reflektor durch die Befestigungsmittel an der Drohne gehalten ist.

4. Vorrichtung nach einem der vorhergehenden Ansprüche, wobei die Außenfläche des Reflektors (2) die Vereinigung von zwei Kronen (2a, 2b) ist, die jeweils die Form eines Kegelstumpfes haben und miteinander einen einspringenden Winkel (α) entlang eines Kreises (2c) der Verbindung zwischen den beiden Kronen bilden, wobei der einspringende Winkel ein rechter Winkel in einer Meridianebene ist, die die Symmetrieachse (A-A) des Reflektors enthält.

5. Vorrichtung nach Anspruch 4, wobei jede der beiden Kronen (2a, 2b) durch Rotation eines Segments eines jeweiligen Generators um die Symmetrieachse (A-A) des Reflektors (2) erzeugt wird, wobei jedes Generatorsegment eine Länge zwischen 0,20 m und 0,50 m aufweist.

6. Vorrichtung nach einem der vorangehenden Ansprüche, wobei der Reflektor (2) eine mittlere elektrische Leitfähigkeit von mehr als 10⁴ Ω⁻¹m·⁻¹ und eine Materialdicke mit dieser mittleren elektrischen Leitfähigkeit aufweist, die größer ist als das Dreifache einer Hautdicke, die für das Eindringen der Radarwelle in das Material wirksam ist, wenn die Radarwelle von dem Reflektor reflektiert wird, oder wobei der Reflektor (2) einen quadratischen Widerstand von weniger als 0,1Ω aufweist.

7. Vorrichtung nach einem der vorhergehenden Ansprüche, wobei der Reflektor (2) einen der folgenden Bestandteile aufweist:
- eine starre Metallstruktur, die aus einem oder mehreren Metallen oder Metalllegierungen besteht;
- eine elektrisch leitfähige Schicht (24), insbesondere eine leitfähige Lackschicht, die eine starre Grundstruktur (23) des Reflektors bedeckt;
- eine starre Struktur, die elektrisch leitende Fasern, wie z. B. Kohlenstofffasern, enthält; und
- ein Metallgitter.

8. Vorrichtung nach einem der vorhergehenden Ansprüche, wobei der Reflektor (2) mindestens einen Wandabschnitt (25) aufweist, der mit zusätzlichen Öffnungen (26) versehen ist, die in einer Umfangsseitenfläche des Reflektors angeordnet sind, zusätzlich zu Öffnungen des Reflektors, die gegenüberliegenden Wandabschnittsgrenzen entlang der Symmetrieachse (A-A) des Reflektors entsprechen.

9. Verfahren zur Kalibrierung, welches unter Verwendung einer Kalibriervorrichtung für Radarmessungen nach einem der vorangehenden Ansprüche durchgeführt wird, wobei das Verfahren gewählt ist aus:
- einer Bestimmung des Wertes der äquivalenten Radarrückstrahlfläche oder des Rückstreukoeffizienten, die für ein Ziel durchgeführt wird, das von einem Radarerfassungs- oder -messsystem erfasst werden soll;
- einer Kalibrierung eines Radarerfassungs- oder -messsystems (100); und
- einer Kalibrierung von Messmitteln für die äquivalente Radarrückstrahlfläche.

10. Verfahren nach Anspruch 9, welches durchgeführt wird unter Verwendung von Radarstrahlung mit einer bestimmten Wellenlänge und unter Verwendung einer Kalibriervorrichtung für Radarmessungen nach Anspruch 8, wobei jede zusätzliche Öffnung (26) eine größere Abmessung aufweist, die kleiner ist als ein Zehntel der Wellenlänge der Radarstrahlung.

## Claims

1. Device for calibrating radar measurements, comprising:
- a flying drone (1) with multiple rotors, the rotors (10) having axes which are vertical during a hovering flight of the drone, and being distributed angularly about a core block (11) of the drone, in a projection on a reference plane (P_{ref}) of the drone which is perpendicular to the axes of the rotors;
- a radar wave reflector (2), having an overall annular shape about an axis of symmetry (A-A) of the reflector, and such that radar wave reflection properties of said reflector are substantially invariant by rotation about said axis of symmetry; and
- means (3) for fastening the reflector (2) to the drone (1), adapted so that the axis of symmetry (A-A) of the reflector remains perpendicular to the reference plane (P_{ref}) of the drone, and so that the reflector laterally surrounds all of the rotors (10) of the drone, when said reflector is held on the drone by said fastening means, so that the drone (1) and the means (3) for fastening the reflector are at least partially concealed by the reflector (2), for a radar wave which reaches the calibration device in a direction of incidence that is oblique or perpendicular to the axis of symmetry (A-A) of the reflector,
**characterised in that** an outer surface of the reflector (2), which faces away from the axis of symmetry (A-A) of said reflector, is one of:
- a joining of two crowns (2a, 2b), each being shaped as a respective truncated cone, and an axis of rotational symmetry of each thereof being the axis of symmetry (A-A) of the reflector, both crowns jointly forming a re-entrant angle (α) along a circle (2c) of intersection between the two cones, said re-entrant angle appearing in a meridian plane which contains the axis of symmetry of the reflector, and being open opposite said axis of symmetry;
- a portion of a sphere, bounded by two planes perpendicular to the axis of symmetry (A-A) of the reflector;
- a portion of an ellipsoid of revolution, an axis of rotational symmetry thereof being the axis of symmetry (A-A) of the reflector (2), and bounded by two planes perpendicular to said axis of symmetry of the reflector; and
- a portion of a cylinder of revolution, an axis of rotational symmetry thereof being the axis of symmetry (A-A) of the reflector, and bounded by two planes perpendicular to said axis of symmetry of the reflector (2).

2. Device according to claim 1, wherein the means (3) for fastening the reflector (2) to the drone (1) are furthermore adapted so that the rotors (10) are comprised between two edges (21, 22) of the reflector which are opposite one another, in a projection on an axis which is perpendicular to the reference plane (P_{ref}) of the drone, when the reflector is held on the drone by said fastening means.

3. Device according to claim 1 or 2, wherein the means (3) for fastening the reflector (2) to the drone (1) are furthermore adapted so that the core block (11) of the drone is comprised between the two edges (21, 22) of the reflector which are opposite one another, in a projection on the axis which is perpendicular to the reference plane (P_{ref}) of the drone, when the reflector is held on the drone by said fastening means.

4. Device according to any one of the preceding claims, wherein the outer surface of the reflector (2) is the joining of two crowns (2a, 2b) each shaped as a respective truncated cone, jointly forming a re-entrant angle (α) along a circle (2c) of junction between the two crowns, said re-entrant angle being a right angle in a meridian plane which contains the axis of symmetry (A-A) of the reflector.

5. Device according to claim 4, wherein each of the two crowns (2a, 2b) is generated by rotating a segment of a respective generatrix about the axis of symmetry (A-A) of the reflector (2), each generatrix segment having a length comprised between 0.20 m and 0.50 m.

6. Device according to any one of the preceding claims, wherein the reflector (2) has an average electrical conductivity greater than 10⁴Ω⁻¹ · m⁻¹, and has a thickness of material having said average electrical conductivity, which is greater than three times an effective skin thickness for penetration of the radar wave into said material when said radar wave is reflected by said reflector,
or wherein the reflector (2) has a sheet resistance of less than 0.1 Q.

7. Device according to any one of the preceding claims, wherein the reflector (2) comprises one of:
- a rigid metal structure, formed by one or more metals or metal alloys;
- an electrically conducting layer (24), in particular a conducting paint layer, which covers a rigid base structure (23) of the reflector;
- a rigid structure which incorporates electrically conducting fibres, such as carbon fibres; and
- a metal wire netting.

8. Device according to any one of the preceding claims, wherein the reflector (2) comprises at least one wall portion (25) which is provided with additional apertures (26) disposed in a peripheral lateral surface of the reflector, in addition to apertures in the reflector that correspond to boundaries of the wall portion which are opposite along the axis of symmetry (A-A) of said reflector.

9. Calibration method, carried out using a device for calibrating radar measurements according to any one of the preceding claims, said method being selected from:
- a determination of an equivalent radar cross-section value, or backscattering coefficient, carried out for a target to be detected by a radar detection or measurement system;
- a calibration of a radar detection or measurement system (100); and
- a calibration of means for measuring equivalent radar cross-section.

10. Method according to claim 9, carried out using radar radiation that has a determined wavelength, and using a device for calibrating radar measurements according to claim 8, and wherein each additional aperture (26) has a largest dimension that is less than one tenth of the wavelength of the radar radiation.
